# EUROPEAN PATENT SPECIFICATION

(11) **EP 3 889 582 B1**
(45) Date of publication and mention of the grant of the patent: **03.04.2024**
(21) Application number: 19908193.6
(22) Date of filing: 12.12.2019
(51) Int. Cl.: G01N 21/55, G01N 21/84, G01N 21/57

(54) **OPTICAL CHARACTERISTIC ANALYSIS APPARATUS AND PROGRAM**
VORRICHTUNG UND PROGRAMM ZUR ANALYSE OPTISCHER EIGENSCHAFTEN
APPAREIL ET PROGRAMME D'ANALYSE DE CARACTÉRISTIQUES OPTIQUES

(30) Priority: 10.01.2019 JP 2019002534
(43) Date of publication of application: 06.10.2021
(73) Proprietor: KONICA MINOLTA, INC., Tokyo 100-7015 (JP)
(72) Inventor: UDA Takushi, Tokyo 100-7015 (JP); TERAOKA Yoshitaka, Tokyo 100-7015 (JP); ABE Yoshihisa, Tokyo 100-7015 (JP)
(74) Representative: Gille Hrabal Partnerschaftsgesellschaft mbB Patentanwälte
(86) International application number: PCT/JP2019/048744
(87) International publication number: WO 2020/145023

(56) References cited:
- JP-A- 2002 174 595
- JP-A- 2003 294 622
- JP-A- 2005 070 026
- JP-A- 2009 303 018
- JP-A- 2015 088 087
- WOLFF L B: "Segmentation Of Specular Highlights From Object Surfaces", PROCEEDINGS OF SPIE, vol. 1005, 7 November 1988 (1988-11-07), pages 198-205, XP055867651, 1000 20th St. Bellingham WA 98225-6705 USA ISSN: 0277-786X, DOI: 10.1117/12.949045 ISBN: 978-1-5106-4548-6
- MAYER H: "Image-based texture analysis for realistic image synthesis", PROCEEDINGS 13TH BRAZILIAN SYMPOSIUM ON COMPUTER GRAPHICS AND IMAGE PROCESSING (CAT. NO. PR00878), 17 October 2000 (2000-10-17), pages 219-226, XP010521948, DOI: 10.1109/SIBGRA.2000.883916 ISBN: 978-0-7695-0878-8

## Description

### BACKGROUND

### Technological Field

The present invention relates to an optical property analyzing apparatus and a program for analyzing an optical property of the surface of a measurement object having, in an outermost region of the measurement object, a sparkling effect material-containing layer containing a sparkling effect material such as aluminum flakes, mica flakes, or pigments.

### Description of the Relate3 Art

Coatings containing a sparkling effect material such as those mentioned above look different in color when viewed from different angles; metallic and pearlescent coatings, for example, are used for vehicles and a wide variety of other industrial products desired to be rich in design.

As a conventional method of measuring a non-color property of a metallic or pearlescent coating, Japanese Unexamined Patent Application Publication No. 2006-208327 suggests a method of measuring metallic or pearlescent effects of a sparkling effect material contained in automotive paint; and this method includes: emitting light to a measurement object in a specific direction or emitting diffused light thereto in all directions; receiving a reflection by a two-dimensional sensor; and analyzing the obtained image.

Inventors have learned that it is efficient to collect a specular and near-specular reflection for the following principal reasons:
(i) some rich pigments have a high brightness and high color saturation property that can be measured only at positions adjacent to the specular reflection; and
(ii) sparkling effect elements in a coating are evenly distributed in a horizontal direction of the coating, and a reflection from the sparkling effect material is supposed to be specular or near-specular.

Patent Literature 1: Japanese Unexamined Patent Application Publication No. 2006-208327
However, when a reflection is received by a two-dimensional sensor as taught in Japanese Unexamined Patent Application Publication No. 2006-208327, the received reflection will include, as well as a reflection from the sparkling effect material, a reflection from the surface of the measurement object.

This means, the component of a specular reflection from the sparkling effect material contained in the outermost region of the measurement object cannot be extracted in a pure form, and an optical property of the sparkling effect material cannot be measured in a timely manner. While the component of a non-specular reflection can be hardly compared to the component of the specular reflection, the brightness originating from particles of the sparkling effect material cannot be measured at positions adjacent to a specular reflection from the measurement object.

The publication "Segmentation of specular highlights from object surfaces", Wolff L B et al., PROCEEDINGS OF SPIE, vol. 1005 (1988), relates to exploiting polarization properties of reflected light to identify specular highlight regions and to separating out diffuse and specular components of reflection. The publication "Image-based texture analysis for realistic image synthesis", Mayer H et al., PROCEEDINGS 13TH BRAZILIAN SYMPOSIUM ON COMPUTER GRAPHICS AND IMAGE PROCESSING (2000), relates to a method to measure reflectance and texture of surfaces in a one step process, and to separate the gathered intensity values into these two parts to eliminate highlighting artifacts from textures.

The present invention, which has been made in consideration of such a technical background as described above, provides an optical property analyzing apparatus and a program that are capable of measuring an optical property of a sparkling effect material in a timely manner; and measuring the brightness originating from particles of the sparking effect material at positions adjacent to a specular reflection from a measurement object having a sparkling effect material-containing layer in an outermost region of the measurement object. Specifically, when a lighting device emits light to the measurement object, a two-dimensional photoelectric conversion element receives a specular and near-specular reflection and obtains image data therefrom; with reference to the image data, the optical property analyzing apparatus analyzes an optical property of the sparkling effect material.

### SUMMARY

According to a first aspect, there is provided an optical property analyzing apparatus as defined with appended independent claim 1. According to a second aspect, there is provided a program for a computer according to appended independent claim 15. Preferred embodiments are defined in the dependent claims.

The component of the specular reflection from the surface of the measurement object can be removed. So, an optical property of the sparkling effect material can be measured in a timely and accurate manner. Furthermore, the brightness originating from particles of the sparkling effect material can be measured at positions adjacent to a specular reflection from the measurement object. In addition, the component of the specular reflection from the surface of the measurement object and the component of the specular reflection from the sparkling effect material can both be calculated. This means, a percentage of the brightness originating from the sparkling effect material with respect to the entire brightness originating from the measurement object 100 can be calculated. Since the component of the reflection from the sparkling effect material can be extracted in a pure form, brightness values measured at various positions including positions adjacent to the specular reflection from the measurement object can be compared to each other.

### BRIEF DESCRIPTION OF THE DRAWINGS

FIG. 1 is a block diagram illustrating a configuration of an optical property analyzing apparatus according to one embodiment of the present invention.
FIG. 2 is a flowchart representing a procedure of calculating the component of a specular reflection from the surface of a measurement object and extracting the component of a reflection from the sparkling effect material.
FIG. 3A is a planar image of a lighting device; FIG. 3B is an overview of a measurement system; and FIG. 3C illustrates a two-dimensional image obtained by a photoelectric conversion element.
FIG. 4A illustrates the two-dimensional image from FIG. 3C; and FIG. 4B illustrates a graph with horizontal axis representing a distance r from the center of the two-dimensional image of FIG. 4A and vertical axis representing brightness.
FIG. 5A illustrates the two-dimensional image from FIG. 3C; FIG. 5B illustrates a graph with horizontal axis representing central angles θ and vertical axis representing the brightness of concyclic pixels; and FIG. 5C illustrates a graph showing the component of a reflection from a sparkling effect material about the concyclic pixels.
FIG. 6A illustrates a graph with horizontal axis representing central angles θ and vertical axis representing the brightness of concyclic pixels; FIG. 6B illustrates the graph after low brightness values are omitted; and FIG. 6C illustrates a graph showing the component of a reflection from the sparkling effect material about the concyclic pixels.
FIG. 7A illustrates a graph with horizontal axis representing central angles θ and vertical axis representing the brightness of concyclic pixels; FIG. 7B illustrates the graph after high brightness values are omitted; and FIG. 7C illustrates a graph showing the component of a reflection from the sparkling effect material about the concyclic pixels.
FIG. 8A illustrates a luminous pattern displayed by a lighting device; and FIG. 8B illustrates a two-dimensional image obtained by the photoelectric conversion element.
FIG. 9A illustrates the two-dimensional image from FIG. 8B; and FIG. 9B illustrates a graph with horizontal axis representing positions X from the middle part having the highest brightness and vertical axis representing brightness in the two-dimensional image of FIG. 9A.
FIG. 10A illustrates the two-dimensional image from FIG. 8B; FIG. 10B illustrates a graph with horizontal axis representing vertical positions Y and vertical axis representing the brightness of vertical collinear pixels; and FIG. 10C illustrates a graph showing the component of a reflection from the sparkling effect material about the vertical collinear pixels.
FIG. 11A illustrates a graph with horizontal axis representing vertical positions Y and vertical axis representing the brightness of vertical collinear pixels; FIG. 11B illustrates the graph after low brightness values are omitted; and FIG. 11C illustrates a graph showing the component of a reflection from the sparkling effect material about the vertical collinear pixels.
FIG. 12A illustrates a graph with horizontal axis representing vertical positions Y and vertical axis representing the brightness of vertical collinear pixels; FIG. 12B illustrates a graph after high brightness values are omitted; and FIG. 11C illustrates a graph showing the component of a reflection from the sparkling effect material about the vertical collinear pixels.
FIG. 13A illustrates other luminous patterns displayed by the lighting device; and FIG. 13B illustrates two-dimensional images obtained by the photoelectric conversion element when these luminous patterns are used.
FIG. 14A illustrates the two-dimensional image B1 from FIG. 13B; and FIG. 14B illustrates a graph with horizontal axis representing distances X from the middle part having the highest brightness and vertical axis representing brightness in the two-dimensional image of FIG. 14A.
FIG. 15A illustrates the two-dimensional image B1 from FIG. 13B; FIG. 15B illustrates a graph with horizontal axis representing vertical positions Y and vertical axis representing the brightness of vertical collinear pixels; and FIG. 15C illustrates a graph showing the component of a reflection from the sparkling effect material about the vertical collinear pixels.

### DETAILED DESCRIPTION OF EMBODIMENTS

Hereinafter, one or more embodiments of the present invention will be described with reference to the drawings. The term "embodiment" does not necessarily mean an embodiment of the invention.

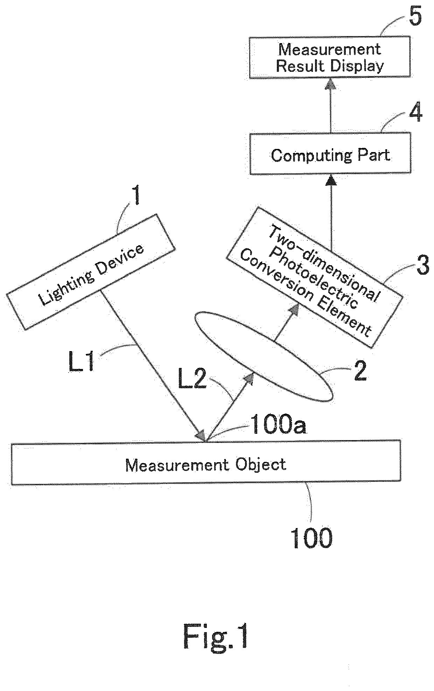

FIG. 1 is a block diagram illustrating a configuration of an optical property analyzing apparatus according to one embodiment of the present invention. The optical property analyzing apparatus illustrated in FIG. 1 is provided with: a single lighting device 1; an object lens 2; a two-dimensional photoelectric conversion element 3 comprised of a CCD image sensor, for example; a computing part 4; and a measurement result display 5 comprised of a liquid-crystal display, for example.

In this embodiment, the lighting device 1 is comprised of a display device capable of displaying a specific luminous pattern; by displaying the luminous pattern, the lighting device 1 emits light L1 to a measurement part 100a of a measurement object 100. Alternatively, the lighting device 1 may be comprised of a point-source light.

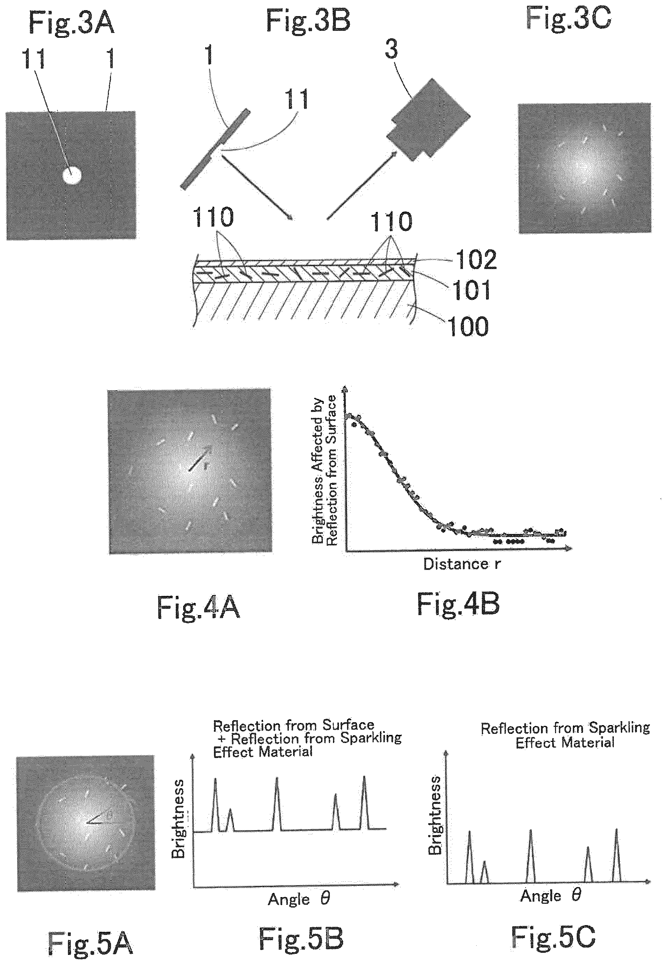

The measurement object 100 has, in an outermost region thereof, a translucent sparkling effect material-containing layer 101 containing a sparkling effect material 110 as illustrated in FIG. 3B; a transparent clear layer 102 is placed on the sparkling effect material-containing layer 101. For example, the sparkling effect material-containing layer 101 is a coating made of a translucent resin containing the sparkling effect material 110 and applied on the surface of the measurement object 100; and the clear layer 102 is a coating applied on the sparkling effect material-containing layer 101.

Back to FIG. 1, the photoelectric conversion element 3 is comprised of a two-dimensional array of many pixels; the photoelectric conversion element 3 receives light L2 reflected from the measurement object 100 via the object lens 2 by each pixel, converts the light to two-dimensional image data, and outputs the data.

In this embodiment, the lighting device 1 and the photoelectric conversion element 3 are arranged such that the photoelectric conversion element 3 can further receive a near-specular reflection from the measurement part 100a. In other words, the photoelectric conversion element 3 is allowed to receive both a specular and near-specular reflection therefrom. In most instances, when the sparkling effect material-containing layer 101 is a coating containing a sparkling effect material, sparkling effect elements in the coating are evenly distributed in a horizontal direction of the coating (an angle of 0 degrees). So, the above-described arrangement is aimed at receiving accurate information of a reflection from the sparkling effect material.

It is preferred that a conjugate relationship be between the surface of the measurement part 100a of the measurement object 100 and the photoelectric conversion element 3.

After image data is outputted in a form of electric signal from the photoelectric conversion element 3, it is converted into digital form as necessary by an IV or AD conversion circuit not illustrated in the figure, then transferred to the computing part 4. The image data received by the computing part 4 includes both the component of a reflection from the sparkling effect material 110 and the component of a specular reflection from the surface of the measurement object 100. The computing part 4 performs the following operations by a processor such as a CPU: calculating the component of a specular reflection from the surface of the measurement object 100; and extracting the component of a reflection from the sparkling effect material 110 contained in the sparkling effect material-containing layer 101 by subtracting, from the image data, the component of the specular reflection from the surface of the measurement object 100. These operations will be later described in detail.

The computing part 4 may be a dedicated device or may be comprised of a personal computer. After image data is outputted from the photoelectric conversion element 3 and converted into digital form, it may be transferred to the computing part 4 through the network. This allows the computing part 4, even when the computing part 4 is away from the location of measurement, to perform: calculating the component of a specular reflection from the surface of the measurement object 100; and extracting the component of a reflection from the sparkling effect material 110 contained in the sparkling effect material-containing layer 101.

Hereinafter, a spatial resolution of the photoelectric conversion element 3 will be described. To detect an observable phenomenon, the photoelectric conversion element 3 is required to have a high spatial resolution equivalent to the resolution of the human eye. According to a study, the minimum length a human eye can perceive is approximately 0.1818 cm. The minimum distance between two points the human eye can perceive is 30 to 50 µm when the human eye is away from the points by 20 to 30 cm.

When an automotive coating contains a sparkling effect material, the diameter of small particles of the sparkling effect material ranges from 10 to 20 µm, and the diameter of large particles of the sparkling effect material is approximately 100 µm. It is preferred that the photoelectric conversion element 3 be configured to detect such sparkling effect elements by its spatial resolution.

This means, it is preferred that the photoelectric conversion element 3 be configured to have a spatial resolution of 10 to 100 µm.

Hereinafter, the operations of the computing part 4, calculating the component of a specular reflection from the surface of the measurement object 100 and extracting the component of a reflection from the sparkling effect material 110 contained in the sparkling effect material-containing layer 101 of the measurement object 100 will be described. The computing part 4 includes a CPU; the CPU performs these operations by executing operation programs stored on a recording medium not shown in the figure.

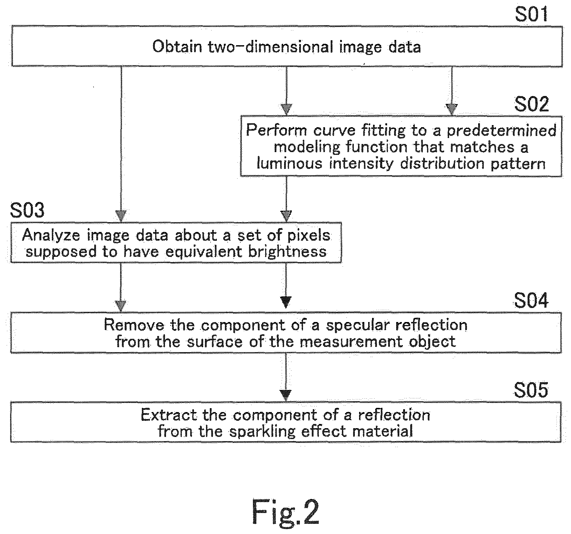

FIG. 2 is a flowchart representing the operations. In Step S01, two-dimensional image data is obtained; the component of a specular reflection from the surface of the measurement object 100 is calculated in Step S02 and S03 or in Step S03. In Step S04, the component of the specular reflection from the surface of the measurement object 100, which is calculated previously, is subtracted from the image data. In Step S05, the component of a reflection from the sparkling effect material 110 is thereby obtained.

A component a specular reflection from the surface of the measurement object 100 is calculated by either step S03 or both of steps S02 and S03: performing curve fitting of the image data with a predetermined modeling function representing a luminous intensity distribution pattern on the measurement object 100 by the lighting device 1 (Step S02); and analyzing image data at positions supposed to have equivalent illuminance according to a luminous intensity distribution pattern on the measurement object 100 by the lighting device 1 (Step S03). Hereinafter, a concrete example of calculating the component of a specular reflection from the surface of the measurement object 100 will be described.

### Embodiment 1

The lighting device 1 emits light to the measurement object 100 by displaying a point sufficiently small with respect to the distance to the measurement object 100. Alternatively, the lighting device 1 may be a light source sufficiently small with respect to the distance to the measurement object 100.

FIG. 3A illustrates a planar image (or to be simply referred to as a display image) of the lighting device 1; FIG. 3B is an overview of a measurement system; and FIG. 3C is a two-dimensional image (or to be simply referred to as an obtained image) obtained by the photoelectric conversion element 3.

A white point 11 at the center of the display image of FIG. 3A is a luminous part. In this display image and the obtained image of FIG. 3C, white and black areas, respectively, have high and low brightness values. Each extra-fine, white line segment in the obtained image of FIG. 3C corresponds to a reflection from the sparkling effect material 110.

Since light is focused on the measurement object 100, the photoelectric conversion element 3 obtains a blurred image from the small white point 11 on the lighting device 1. The computing part 4 measures the brightness of each pixel in the two-dimensional image data. The computing part 4 then calculates the component of a specular reflection from the surface of the measurement object 100 with reference to the obtained brightness data, as described below.

### Embodiment 1-1 (example outside the scope of the appended claims but useful for understanding the invention)

In this embodiment, the component of a specular reflection from the surface of the measurement object 100 is calculated by Step S02 of FIG. 2, which is a process of performing curve fitting of the image data with a predetermined modeling function representing a luminous intensity distribution pattern on the measurement object 100 by the lighting device 1.

When a luminous part is a small point as illustrated in FIG. 3A, the obtained image shows a blurred white point as illustrated in FIG. 3C, whose central part has the highest brightness, and the brightness becomes lower as the position is farther away from the center in all directions. So, when the density of the sparkling effect material 110 is sufficiently low, the measured brightness values, the radial brightness distribution from the central part having the highest brightness in the obtained image is supposed to be represented by a two-dimensional Gaussian function.

So, curve fitting of the brightness data in a radial direction in the obtained image, with a two-dimensional Gaussian function, is performed. This operation will be further described with reference to FIG. 4. FIG. 4A illustrates the obtained image from FIG. 3C; and FIG. 4B illustrates a graph with horizontal axis representing a distance r from the center and vertical axis representing brightness. Referring to FIG. 4B, the graph has many black points representing the measured brightness values of radial collinear pixels in the obtained image. Being subjected to curve fitting with a two-dimensional Gaussian function, the brightness data composes a curve represented by the two-dimensional Gaussian function as illustrated in FIG. 4B; this curve is calculated as the component of a specular reflection from the surface of the measurement object 100.

The computing part 4 then extracts the component of a reflection from the sparkling effect material 110 contained in the sparkling effect material-containing layer 101 of the measurement object 100 by subtracting the component of the specular reflection from the surface of the measurement object 100, from the measured values of the brightness data.

And the computing part 4 repeats this operation about all radial directions, and thereby extracts, from the obtained image, the entire component of the reflection from the sparkling effect material 110 contained in the sparkling effect material-containing layer 101 of the measurement object 100.

### Embodiment 1-2

In this embodiment according to the invention, the component of a specular reflection from the surface of the measurement object 100 is calculated by Step S03 of FIG. 2, which is a process of analyzing image data at positions supposed to have equivalent illuminance according to a luminous intensity distribution pattern on the measurement object 100 by the lighting device 1.

In the obtained image of FIG. 3C, concyclic pixels whose center indicates the highest brightness are supposed to be evenly affected by a specular reflection from the surface of the measurement object 100. Some of these pixels are further affected by a reflection from the sparkling effect material 110, as well as the specular reflection from the surface of the measurement object 100.

Meanwhile, the concyclic pixels not affected by the reflection from the sparkling effect material 110 have the lowest brightness value. So, the computing part 4 calculates the component of a specular reflection from the surface of the measurement object 100 by obtaining the lowest brightness value of the concyclic pixels.

This operation will be further described with reference to FIG. 5. FIG. 5A illustrates the obtained image from FIG. 3C; and FIG. 5B illustrates a graph with horizontal axis representing central angles θ and vertical axis representing the brightness of concyclic pixels. The lowest brightness value of the concyclic pixels in the graph of FIG. 5B is used as the component of a specular reflection from the surface of the measurement object 100. FIG. 5C illustrates the graph after the component of the specular reflection is subtracted from the brightness data of FIG. 5B, and the graph shows the component of a reflection from the sparkling effect material 110 about the concyclic pixels.

The lowest brightness value of the concyclic pixels is obtained, thereby the component of a specular reflection from the surface of the measurement object 100 is calculated. And the calculated component is subtracted from the brightness data of the concyclic pixels. The computing part 4 repeats this operation about all concentric circles while changing the distance r from the center, and thereby extracts the entire component of a reflection from the sparkling effect material.

### Embodiment 1-3

In Embodiment 1-2 described above, the lowest brightness value of the concyclic pixels is used as the component of a specular reflection from the surface of the measurement object 100. However, when the measurement object 100 has a flaw, a stain, or a rough spot on its surface, the brightness of the reflection is naturally lower. The lowest brightness value of the concyclic pixels is still lower than the component of the specular reflection from the surface of the measurement object 100, negatively affecting the accuracy of calculating the component of the specular reflection.

So, it is preferred that low brightness values caused by a flaw, a stain, or a rough spot be omitted from the brightness data of the concyclic pixels in the image data so as not to be used for calculating the component of a specular reflection from the surface of the measurement object 100. This will contribute to the accuracy of calculating the component of a specular reflection from the surface of the measurement object 100.

Specifically, low brightness values that do not fall within a predetermined range of dispersion (standard deviation) with respect to the mean value may be omitted, or low brightness values that are still lower than a predetermined threshold may be omitted. When a flaw, a stain, or a rough spot is sufficiently small to affect few concyclic pixels, it is preferred that low brightness values that do not fall within a predetermined range of dispersion (standard deviation) with respect to the mean value, be omitted.

After the omission, the lowest brightness value of the concyclic pixels in the brightness data is obtained, thereby the component of a specular reflection from the surface of the measurement object 100 is calculated. And the calculated component is subtracted from the brightness values of the concyclic pixels. The computing part 4 repeats this operation about all concentric circles, and thereby extracts the entire component of a reflection from the sparkling effect material 110.

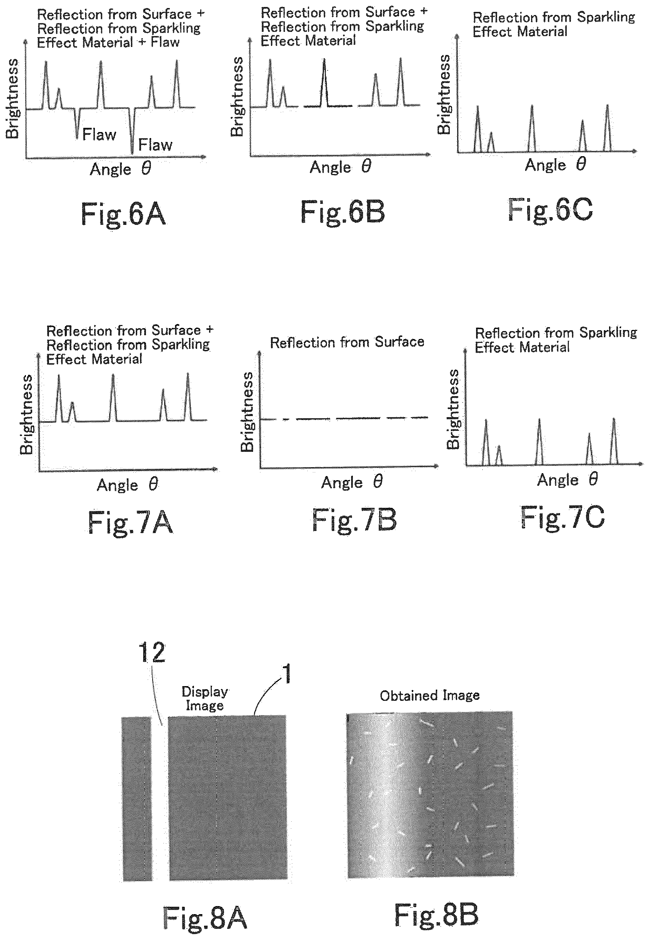

This operation will be further described with reference to FIG. 6. FIG. 6A illustrates a graph with horizontal axis representing central angles θ and vertical axis representing the brightness of concyclic pixels, which includes low brightness values caused by a flaw, for example. FIG. 6B illustrates the graph after these low brightness values are omitted. The lowest brightness value of the concyclic pixels in the graph of FIG. 6B is used as the component of a specular reflection from the surface of the measurement object 100. FIG. 6C illustrates the graph after the component of the specular reflection is subtracted from the brightness data of FIG. 6B, and the graph shows the component of a reflection from the sparkling effect material 110 about the concyclic pixels.

### Embodiment 1-4

In this embodiment, after the component of a reflection from the surface of the sparkling effect material 110 is omitted, the component of a specular reflection from the measurement object 100 is calculated.

Specifically, high brightness values that do not fall within a predetermined range of dispersion (standard deviation) with respect to the mean value may be omitted from the brightness data of the concyclic pixels, or high brightness values that are still higher than a predetermined threshold may be omitted from the same. This is because these high brightness values are the component of a reflection from the measurement object 100. So, when the sparkling effect material 110 affects sufficiently a few concyclic pixels, it is preferred that high brightness values that do not fall within a predetermined range of dispersion (standard deviation) with respect to the mean value, be omitted.

After the omission, the lowest brightness value of the concyclic pixels in the brightness data is obtained or Fourier-transform frequencies lower than a threshold are extracted, thereby the component of a specular reflection from the surface of the measurement object 100 is calculated. After Fourier-transform frequencies lower than a threshold are extracted, these frequencies are inversed. And the calculated component is subtracted from the brightness data of the concyclic pixels. The computing part 4 repeats this operation about all concentric circles, and thereby extracts the entire component of a reflection from the sparkling effect material 110.

This operation will be further described with reference to FIG. 7. FIG. 7A illustrates a graph with horizontal axis representing a central angle θ and vertical axis representing the brightness of concyclic pixels; FIG. 7B illustrates the graph after high brightness values are omitted. The component of a specular reflection from the surface of the measurement object 100 is calculated with reference to the brightness data of FIG. 7B, and the calculated component of the specular reflection is subtracted from the brightness data of FIG. 7A. FIG. 7C illustrates a graph showing the component of a reflection from the sparkling effect material 110 about the concyclic pixels.

### Embodiment 1-5

In this embodiment, the component of a specular reflection from the surface of the measurement object 100 is calculated by a combination of the process described above in Embodiment 1-2 (Step S03 of FIG. 2) and the process described above in Embodiment 1-1 (Step S02 of FIG. 2).

In Embodiment 1-2 described above, the lowest brightness value of the concyclic pixels is used as the component of a specular reflection from the surface of the measurement object 100. Meanwhile, the measured brightness values may be affected by noise of a constant level. It is dark current noise and readout noise, for example, produced by the two-dimensional photoelectric conversion element 3. Even after low brightness values caused by a flaw, a stain, or a rough spot are omitted properly, the measured brightness values may be still affected by these noises.

In this case, curve fitting with a modeling function as described in Embodiment 1-1 is combined with the process. Specifically, curve fitting of the radial brightness data from the center part having the highest brightness in the obtained image, with a two-dimensional Gaussian function, is combined. This will contribute to the accuracy of calculating the component of a specular reflection from the surface of the measurement object 100.

And the calculated component is subtracted from the measured brightness values. The computing part 4 repeats this operation and thereby extracts the entire component of a reflection from the sparkling effect material 110.

### Embodiment 2

In Embodiment 1, the lighting device 1 emits light to the measurement object 100 by displaying a point sufficiently small with respect to the distance to the measurement object 100. In Embodiment 2, the lighting device 1 emits light to the measurement object 100 by displaying a line sufficiently narrow with respect to the distance to the measurement object 100 in an optical manner similar to Embodiment 1. Alternatively, the lighting device 1 may be a liner light source sufficiently narrow with respect to the distance to the measurement object 100.

FIG. 8A illustrates a display image of the lighting device 1; FIG. 8B is an image obtained by the photoelectric conversion element 3. A vertical white line 12 in the display image of FIG. 8A is a luminous part. In this display image and the obtained image of FIG. 8B, white and black areas, respectively, have high and low brightness values. Each extra-fine, white line segment in the obtained image of FIG. 8B corresponds to a reflection from the sparkling effect material 110.

Since light is focused on the measurement object 100, the photoelectric conversion element 3 obtains a blurred image from the luminous part on the lighting device 1. The computing part 4 measures the brightness of each pixel in the two-dimensional image data. The computing part 4 then calculates the component of a specular reflection from the surface of the measurement object 100 with reference to the obtained brightness data, as described below.

### Embodiment 2-1 (example outside the scope of the appended claims but useful for understanding the invention)

In this embodiment, the component of a specular reflection from the surface of the measurement object 100 is calculated in a similar manner to Embodiment 1-1 by Step S02 of FIG. 2, which is a process of performing curve fitting of the image data with a predetermined modeling function representing a luminous intensity distribution pattern on the measurement object 100 by the lighting device 1.

When a luminous part is a vertical narrow line as illustrated in FIG. 8A, the obtained image shows a blurred narrow line as illustrated in FIG. 8B, whose middle part in a cross (horizontal) direction has the highest brightness, and the brightness becomes lower as the position is farther away from the middle part in the cross direction. Vertical collinear pixels are supposed to be evenly affected by a specular reflection from the surface of the measurement object 100. So, when the density of the sparkling effect material 110 is sufficiently low, the brightness distribution in the obtained image is supposed to be a Gaussian distribution in a horizontal direction and represented by a function not depending on vertical coordinates, a Gaussian function having horizontal coordinates (positions of vertical collinear pixels) as variables.

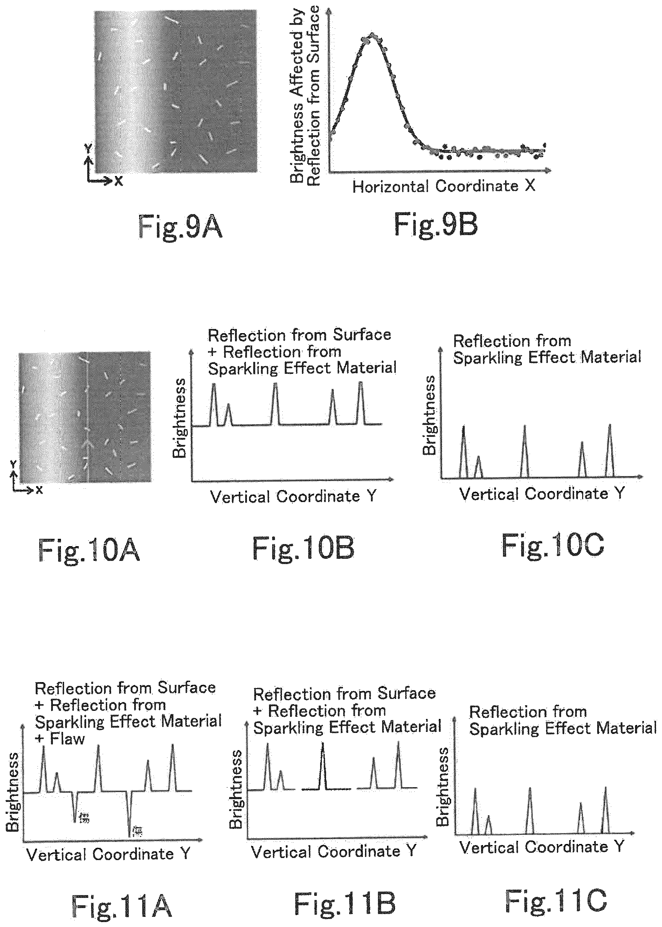

So, curve fitting of the brightness data in the horizontal direction in the obtained image, with a two-dimensional Gaussian function, is performed. This operation will be further described with reference to FIG. 9. FIG. 9A illustrates the obtained image from FIG. 8B; and FIG. 9B illustrates a graph with horizontal axis representing horizontal positions X (positions of vertical collinear pixels) from the middle part having the highest brightness and vertical axis representing brightness. Referring to FIG. 9B, the graph has many black points representing the measured brightness values of pixels in the direction X in the obtained image. Being subjected to curve fitting with a Gaussian function having horizontal coordinates (positions of the vertical collinear pixels) as variables, the brightness data composes a curve as illustrated in FIG. 9B; this curve is calculated as the component of a specular reflection from the surface of the measurement object 100.

The computing part 4 then extracts the component of a reflection from the sparkling effect material 110 contained in the sparkling effect material-containing layer 101 of the measurement object 100 by subtracting the component of the specular reflection from the surface of the measurement object 100, from the brightness data.

And the computing part 4 repeats this operation about all vertical lines, and thereby extracts, from the obtained image, the entire component of the reflection from the sparkling effect material 110 contained in the sparkling effect material-containing layer 101 of the measurement object 100.

### Embodiment 2-2

In this embodiment according to the invention, the component of a specular reflection from the surface of the measurement object 100 is calculated in a similar manner to Embodiment 1-2 by Step S03 of FIG. 2, which is a process of analyzing image data at positions supposed to have equivalent illuminance according to a luminous intensity distribution pattern on the measurement object 100 by the lighting device 1.

In the obtained image of FIG. 8C, vertical collinear pixels are supposed to be evenly affected by a specular reflection from the surface of the measurement object 100. Some of these pixels are further affected by a reflection from the sparkling effect material 110, as well as the specular reflection from the surface of the measurement object 100.

Meanwhile, the other vertical collinear pixels are not affected by the reflection from the sparkling effect material 110 and have the lowest brightness value. So, the computing part 4 calculates the component of a specular reflection from the surface of the measurement object 100 by obtaining the lowest brightness value of the vertical collinear pixels.

This operation will be further described with reference to FIG. 10. FIG. 10A illustrates the obtained image from FIG. 8B; and FIG. 10B illustrates a graph with horizontal axis representing vertical positions Y and vertical axis representing the brightness of vertical collinear pixels. FIG. 10C illustrates the graph after the lowest brightness value is subtracted from the brightness data of FIG. 10B, and the graph has the component of a reflection from the sparkling effect material 110 about the vertical collinear pixels.

The lowest brightness value of the vertical collinear pixels is obtained, thereby the component of a specular reflection from the surface of the measurement object 100 is calculated. And the calculated component is subtracted from the brightness data of the vertical collinear pixels. The computing part 4 repeats this operation about all vertical lines while changing the horizontal position X, and thereby extracts the entire component of a reflection from the sparkling effect material 110.

### Embodiment 2-3

In this embodiment, low brightness values caused by a flow, a stain, or a rough spot on the surface of the measurement object 100 are omitted, contributing to the accuracy of calculating the component of a specular reflection from the surface of the measurement object 100 in a similar manner to Embodiment 1-3.

Specifically, it is preferred that low brightness values caused by a flaw, a stain, or a rough spot be omitted from the brightness data of the vertical collinear pixels in the image data so as not to be used for calculating the component of a specular reflection from the surface of the measurement object 100. This will contribute to the accuracy of calculating the component of a specular reflection from the surface of the measurement object 100.

More specifically, low brightness values that do not fall within a predetermined range of dispersion (standard deviation) with respect to the mean value may be omitted, or low brightness values that are still lower than a predetermined threshold may be omitted. When a flaw, a stain, or a rough spot affects sufficiently a few vertical collinear pixels, it is preferred that low brightness values that do not fall within a predetermined range of dispersion (standard deviation) with respect to the mean value, be omitted.

After the omission, the lowest brightness value of the vertical collinear pixels in the brightness data is obtained, thereby the component of a specular reflection from the surface of the measurement object 100 is calculated. And the calculated component is subtracted from the brightness data of the vertical collinear pixels. The computing part 4 repeats this operation about all vertical lines, and thereby extracts the entire component of a reflection from the sparkling effect material 110.

This operation will be further described with reference to FIG. 11. FIG. 11A illustrates a graph with horizontal axis representing vertical positions Y and vertical axis representing the brightness of vertical collinear pixels, which includes low brightness values caused by a flaw, for example. FIG. 11B illustrates the graph after low brightness values are omitted. FIG. 11C illustrates the graph after the lowest brightness value is subtracted from the brightness data of FIG. 11B, and the graph has the component of a reflection from the sparkling effect material 110 about the vertical collinear pixels.

### Embodiment 2-4

In this embodiment, after the component of a reflection from the surface of the sparkling effect material 110 is omitted, the component of a specular reflection from the measurement object 100 is calculated in a similar manner to Embodiment 1-4.

Specifically, high brightness values that do not fall within a predetermined range of dispersion (standard deviation) with respect to the mean value may be omitted from the brightness data of the vertical collinear pixels, or high brightness values that are still higher than a predetermined threshold may be omitted from the same. This is because these high brightness values are the component of a reflection from the measurement object 100. So, when the sparkling effect material 110 affects sufficiently a few vertical collinear pixels, it is preferred that high brightness values that do not fall within a predetermined range of dispersion (standard deviation) with respect to the mean value, be omitted.

After the omission, the lowest brightness value of the vertical collinear pixels in the brightness data is obtained or Fourier-transform frequencies lower than a threshold are extracted, thereby the component of a specular reflection from the surface of the measurement object 100 is calculated. After Fourier-transform frequencies lower than a threshold are extracted, these frequencies are inversed. And the calculated component is subtracted from the brightness data of the vertical collinear pixels. The computing part 4 repeats this operation about all vertical lines, and thereby extracts the entire component of a reflection from the sparkling effect material 110.

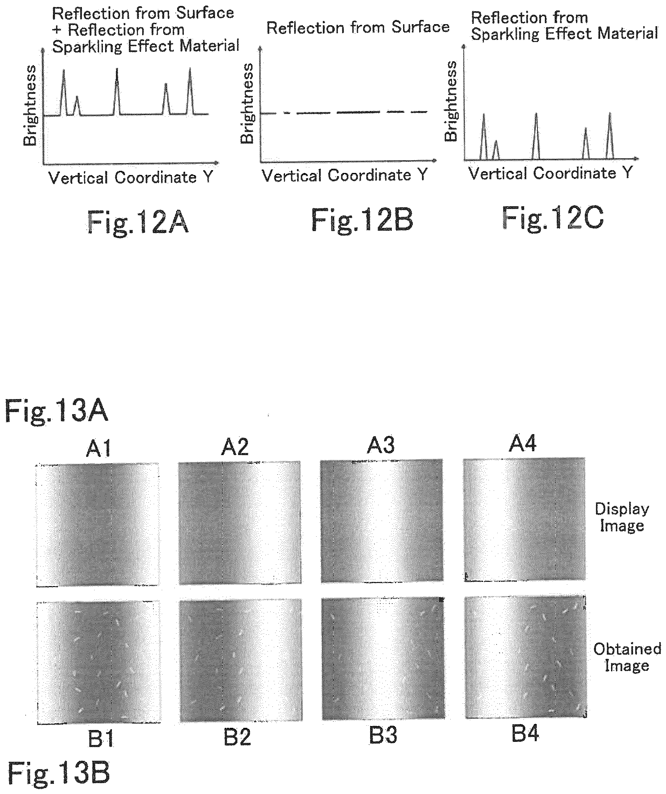

This operation will be further described with reference to FIG. 12. FIG. 12A illustrates a graph with horizontal axis representing vertical positions Y and vertical axis representing the brightness of vertical collinear pixels; FIG. 12B illustrates the graph after high brightness values are omitted. The component of a specular reflection from the surface of the measurement object 100 is calculated with reference to the brightness data of FIG. 12B, and the calculated component of the specular reflection is subtracted from the brightness data of FIG. 12A. FIG. 12C illustrates a graph showing the component of a reflection from the sparkling effect material 110 about the vertical collinear pixels.

### Embodiment 2-5

In this embodiment, the component of a specular reflection from the surface of the measurement object 100 is calculated by a combination of the process described above in Embodiment 2-2 and the process described above in Embodiment 2-1.

In Embodiment 2-2 described above, the lowest brightness value of the vertical collinear pixels is used as the component of a specular reflection from the surface of the measurement object 100. Meanwhile, the measured brightness values may be affected by noise of a certain level. It is dark current noise and readout noise, for example, produced by the two-dimensional photoelectric conversion element 3. Even after low brightness values caused by a flaw, a stain, or a rough spot are omitted properly, the measured brightness values may be still affected by these noises.

In this case, curve fitting with a modeling function as described in Embodiment 2-1 is combined with the process. Specifically, curve fitting of the brightness data in the horizontal direction from the middle part having the highest brightness in the obtained image, with a Gaussian function having horizontal coordinates (positions of the vertical collinear pixels) as variables, is combined. This will contribute to the accuracy of calculating the component of a specular reflection from the surface of the measurement object 100.

And the calculated component is subtracted from the measured brightness values. The computing part 4 repeats this operation and thereby extracts the entire component of a reflection from the sparkling effect material 110.

### Embodiment 3

In Embodiment 1, the component of a specular reflection from the surface of the measurement object 100 is calculated when the lighting device 1 that displays a small point is used; in Embodiment 2, the same is calculated when the lighting device 1 that displays a narrow line is used.

Alternatively, the lighting device 1 that displays luminous patterns changing the brightness in one direction, such as display images A1 to A4 illustrated in FIG. 13A, may be used. The luminous patterns changing the brightness in one direction are, for example, luminous patterns whose brightness composes a sine or cosine wave that periodically changes in a horizontal axis direction.

When the lighting device 1 emits light to the measurement object 100 with the display images A1 to A4, respectively, the photoelectric conversion element 3 obtains images B1 to B4 illustrated in FIG. 13B. A vertical white line 12 in the display images A1 to A4 of FIG. 13A is a luminous part. In these display images and the obtained images B1 to B4 of FIG. 13B, white and black areas, respectively, have high and low brightness values. Each extra-fine, white line segment in the obtained images B1 to B4 corresponds to a reflection from the sparkling effect material 110.

The computing part 4 measures the brightness of each pixel in the two-dimensional image data. The computing part 4 then calculates the component of a specular reflection from the surface of the measurement object 100 with reference to the obtained brightness data, as described below.

### Embodiment 3-1 (example outside the scope of the appended claims but useful for understanding the invention) J Z

In this embodiment, the component of a specular reflection from the surface of the measurement object 100 is calculated in a similar manner to Embodiment 2-1 by Step S02 of FIG. 2, which is a process of performing curve fitting of the image data with a predetermined modeling function representing a luminous intensity distribution pattern on the measurement object 100 by the lighting device 1.

The lighting device 1 that displays the display image A1 of FIG. 13A is used, for example. In the obtained image B1 of FIG. 13B, vertical collinear pixels are supposed to be evenly affected by a specular reflection from the surface of the measurement object 100, and the brightness distribution composes a cosine wave that changes in brightness in a horizontal axis direction without depending on vertical coordinates. So, when the density of the sparkling effect material 110 is sufficiently low, the brightness distribution of the obtained image is supposed to compose a cosine wave in a horizontal axis direction and be represented by a cosine function not depending on vertical coordinates.

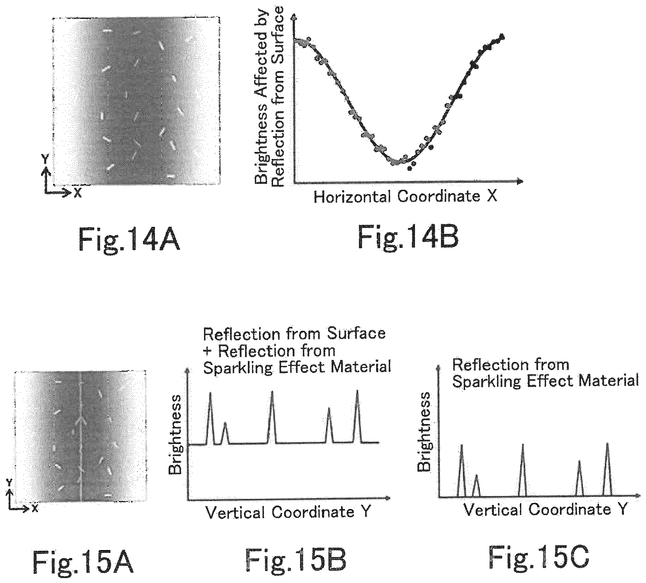

So, curve fitting of the brightness data in the horizontal axis direction in the obtained image B1, with a cosine function, is performed. This operation will be further described with reference to FIG. 14. FIG. 14A illustrates the obtained image B1 from FIG. 13B; and FIG. 14B illustrates a graph with horizontal axis representing the horizontal positions X (positions of vertical collinear pixels) from the middle part having the highest brightness and vertical axis representing brightness. Referring to FIG. 14B, the graph has many black points representing the measured brightness values of pixels in the direction X in the obtained image. Being subjected to curve fitting with a cosine function having horizontal coordinates (positions of the vertical collinear pixels) as variables, the brightness data composes a curve as illustrated in FIG. 14B; this curve is calculated as the component of a specular reflection from the surface of the measurement object 100.

The computing part 4 then extracts the component of a reflection from the sparkling effect material 110 contained in the sparkling effect material-containing layer 101 by subtracting the component of the specular reflection from the surface of the measurement object 100, from the measured values of the brightness data.

And the computing part 4 repeats this operation about all vertical lines, and thereby extracts, from the obtained image, the entire component of the reflection from the sparkling effect material 110 contained in the sparkling effect material-containing layer 101 of the measurement object 100.

The same is true for the obtained images B2 to B4 of FIG. 13B when the lighting device 1 that displays the display images A2 to A4 of FIG. 13A is used.

### Embodiment 3-2

In this embodiment according to the invention, the component of a specular reflection from the surface of the measurement object 100 is calculated in a similar manner to Embodiment 2-2 by Step S03 of FIG. 2, which is a process of analyzing image data at positions supposed to have equivalent illuminance according to a luminous intensity distribution pattern on the measurement object 100 by the lighting device 1.

The lighting device 1 that displays the display image A1 of FIG. 13A is used, for example. In the obtained image B1 of FIG. 13B, vertical collinear pixels are supposed to be evenly affected by a specular reflection from the surface of the measurement object 100. Some of these pixels are further affected by a reflection from the sparkling effect material 110, as well as the specular reflection from the surface of the measurement object 100.

Meanwhile, the vertical collinear pixels not affected by the reflection from the sparkling effect material 110 have the lowest brightness value. So, the computing part 4 calculates the component of a specular reflection from the surface of the measurement object 100 by obtaining the lowest brightness value of the vertical collinear pixels.

This operation will be further described with reference to FIG. 15. FIG. 15A illustrates the obtained image B1 from FIG. 13B; and FIG. 15B illustrates a graph with horizontal axis representing vertical positions Y and vertical axis representing the brightness of vertical collinear pixels. FIG. 15C illustrates the graph after the lowest brightness value is subtracted from the brightness data of FIG. 15B, and the graph has the component of a reflection from the sparkling effect material 110 about the vertical collinear pixels.

The lowest brightness value of the vertical collinear pixels is obtained, thereby the component of a specular reflection from the surface of the measurement object 100 is calculated. And the calculated component is subtracted from the brightness data of the vertical collinear pixels while changing the horizontal position X. The computing part 4 repeats this operation about all vertical lines, and thereby extracts the entire component of a reflection from the sparkling effect material 110.

The same is true for the obtained images B2 to B4 of FIG. 13B when the lighting device 1 that displays the display images A2 to A4 of FIG. 13A is used.

### Embodiment 3-3

In Embodiment 3-2, low brightness values caused by a flaw, a stain, or a rough spot on the surface of the measurement object 100 may be omitted, contributing to the accuracy of calculating the component of a specular reflection from the surface of the measurement object 100 in a similar manner to Embodiment 2-3.

In Embodiment 3-2, after the component of a reflection from the surface of the sparkling effect material 110 is omitted, the component of a specular reflection from the measurement object 100 may be calculated in a similar manner to Embodiment 2-4.

Alternatively, the component of a specular reflection from the surface of the measurement object 100 may be calculated in a similar manner to Embodiment 2-5, by a combination of the process described above in Embodiment 3-1 and the process described above in Embodiment 3-2.

Some embodiments of the present invention have been described above; in these embodiments, the component of a specular reflection from the surface of the measurement object 100 can be removed. So, an optical property of the sparkling effect material 110 can be measured in a timely and accurate manner. Furthermore, the brightness originating from particles of the sparkling effect material 110 can be measured at positions adjacent to a specular reflection from the measurement object 100. In addition, the component of a specular reflection from the surface of the measurement object 100 and the component of a reflection from the sparkling effect material 110 both can be calculated. This means, a percentage of the brightness originating from the sparkling effect material 110 with respect to the entire brightness originating from the measurement object 100 can be calculated. Since the component of the reflection from the sparkling effect material 110 can be extracted in a pure form, brightness values measured at various positions including positions adjacent to the specular reflection from the measurement object 100 can be compared to each other.

After an optical property of the sparkling effect material 110 is obtained by removing the component of the specular reflection from the surface of the measurement object 100, it should be understood that a method of measuring the optical property of the sparkling effect material 110 is in no way limited to a certain method and various methods can be employed.

Furthermore, it should be understood that the present invention is in no way limited to the above-described embodiments. For example, periodic functions such as a Gaussian function, a cosine wave, and a sine wave are used as modeling functions for curve fitting. Alternatively, other functions representing a luminous intensity distribution pattern by the lighting device 1, such as an exponential function and a polynomial function of degree zero or greater, may be used.

The present application claims priority of Japanese Patent Application No. 2019-002534 filed on January 10, 2019.

It should be understood that the terms and wordings used in the Specification are for illustrative purposes, not for a limited interpretation, neither for the purpose of excepting any equivalents to the characteristic matters illustrated and described herein, but for the purpose of permitting any variation within the scope claimed in the invention.

Some graphic embodiments of the present invention have been described above; it should be understood that the present invention is in no way limited to these embodiments. The present invention includes an embodiment having an equal matter, an amended embodiment, an embodiment missing a part, an embodiment having a combination of characteristics (for example, a combination of characteristics from various embodiments), a refined and/or modified embodiment, and any other embodiment that can be recognized with reference to the present disclosure by persons ordinarily skilled in the art.

### Industrial Applicability

The present invention can be applied to an analysis of an optical property of the surface of a measurement object having, in an outermost region thereof, a sparkling effect material-containing layer containing a sparkling effect material such as aluminum flakes, mica flakes, or pigments.

### Explanation of references

1: Lighting device
2: Object lens
3: Two-dimensional photoelectric conversion element
4: Computing part
5: Measurement result display
100: Measurement object
100a: Measurement part
101: Sparkling effect material-containing layer
102: Clear layer
110: Sparkling effect material

## Claims

1. An optical property analyzing apparatus comprising:
a single lighting device (1) configured to emit light to a measurement object (100) and to provide a luminous intensity distribution pattern on the measurement object (100);
a two-dimensional photoelectric conversion element (3) comprising a two-dimensional array of pixels, the two-dimensional photoelectric conversion element (3) arranged to receive a specular and near-specular reflection and to convert the reflections to image data when, in use, the single lighting device (1) emits the light to the measurement object (100) having a sparking effect material-containing layer in an outermost region of the measurement object (100), the sparkling effect material-containing layer (101) containing a sparkling effect material (110);
a calculating means configured to calculate a first component that is a component of a specular reflection from a surface of the measurement object (100), with reference to the image data; and
an extracting means configured to extract a second component that is a component of a reflection from the sparkling effect material (110), by subtracting the first component from the image data, the first component being calculated by the calculating means;
**characterized in that** the calculating means is configured to calculate the first component by analyzing the image data at positions supposed to have equivalent illuminance according to the luminous intensity distribution pattern on the measurement object (100) by the lighting device (1) and to obtain the common specular reflection component at the positions.

2. The optical property analyzing apparatus according to Claim 1, wherein the lighting device (1) is capable of displaying a specific luminous pattern.

3. The optical property analyzing apparatus according to Claim 1 or 2, wherein the calculating means calculates the first component by performing curve fitting of the image data with a predetermined modeling function, the predetermined modeling function representing a luminous intensity distribution pattern on the measurement object by the lighting device (1).

4. The optical property analyzing apparatus according to Claim 1 or 2, wherein the calculating means calculates the first component by repeating:
a first process of performing curve fitting with a predetermined modeling function, the predetermined modeling function representing a luminous intensity distribution pattern on the measurement object (100) by the lighting device (1); and
a second process of analyzing the image data at positions supposed to have equivalent illuminance according to the luminous intensity distribution pattern on the measurement object (100) by the lighting device (1) and obtaining a common specular reflection component at the positions.

5. The optical property analyzing apparatus according to Claim 1 or 4, wherein the calculating means calculates the first component by measuring brightness in the image data at the positions supposed to have equivalent illuminance and obtaining the lowest brightness value as a common specular reflection component at the positions.

6. The optical property analyzing apparatus according to Claim 1 or 4, wherein the calculating means calculates the first component by calculating a Fourier transform of brightness information in the image data at the positions supposed to have equivalent illuminance, extracting Fourier-transform frequencies lower than a predetermined threshold, and calculating an inverse Fourier transform of the extracted frequencies as a common specular reflection component at the positions.

7. The optical property analyzing apparatus according to any one of Claims 1 to 6, wherein, when an image data value to be used for calculating the first component is a value that does not fall within a predetermined range of the standard deviation or the values that are lower than a predetermined threshold , the calculating means does not use the image data value for calculating the first component.

8. The optical property analyzing apparatus according to any one of Claims 1 to 6, wherein, when an image data value to be used for calculating the first component is less than a predetermined threshold, the calculating means does not use the image data value for calculating the first component.

9. The optical property analyzing apparatus according to any one of Claims 1 to 8, wherein, when an image data value to be used for calculating the first component is a value that does not fall within a predetermined range of the standard deviation or the values that are higher than a predetermined threshold, the calculating means does not use the image data value for calculating the first component.

10. The optical property analyzing apparatus according to any one of Claims 1 to 8, wherein, when an image data value to be used for calculating the first component is greater than a predetermined threshold, the calculating means does not use the image data value for calculating the first component.

11. The optical property analyzing apparatus according to Claim 3 or 4, wherein the predetermined modeling function representing the luminous intensity distribution pattern by the lighting device (1) is a polynomial function of degree zero or greater.

12. The optical property analyzing apparatus according to Claim 3 or 4, wherein the predetermined modeling function representing the luminous intensity distribution pattern by the lighting device (1) is a periodic function.

13. The optical property analyzing apparatus according to Claim 3 or 4, wherein the predetermined modeling function representing the luminous intensity distribution pattern by the lighting device (1) is an exponential function.

14. The optical property analyzing apparatus according to Claim 3 or 4, wherein the predetermined modeling function representing the luminous intensity distribution pattern by the lighting device (1) is a Gaussian function.

15. A program for a computer comprising instructions which, when executed on a computing part (4) comprised in the apparatus of claim 1, cause the apparatus of claim 1 to execute the following steps:
when a single lighting device (1) emits light to a measurement object (100) having a sparkling effect material-containing layer (101) in an outermost region of the measurement object (100) and a photoelectric conversion element receives a reflection to obtain image data, the sparkling effect material-containing layer (101) containing a sparkling effect material (110), calculating a first component that is a component of a specular reflection from a surface of the measurement object (100), with reference to the image data; and
extracting a second component that is a component of a reflection from the sparkling effect material (110), by subtracting the first component from the image data, the first component being obtained by the calculation;
wherein the first component is calculated by analyzing the image data at positions supposed to have equivalent illuminance according to a luminous intensity distribution pattern on the measurement object (100) by the lighting device (1) and obtaining a common specular reflection component at the positions.

16. The program according to Claim 15 for the computer to execute processing, wherein the first component is calculated by performing curve fitting of the image data with a predetermined modeling function, the predetermined modeling function representing a luminous intensity distribution pattern on the measurement object (100) by the lighting device (1).

17. The program according to Claim 15 for the computer to execute processing, wherein the first component is calculated by repeating about the entire image data:
a first process of performing curve fitting with a predetermined modeling function, the predetermined modeling function representing a luminous intensity distribution pattern on the measurement object (100) by the lighting device (1); and
a second process of analyzing the image data at positions supposed to have equivalent illuminance according to the luminous intensity distribution pattern on the measurement object (100) by the lighting device (1) and obtaining a unique specular reflection component at the positions.

## Patentansprüche

1. Vorrichtung zur Analyse optischer Eigenschaften, umfassend:
eine einzelne Beleuchtungsvorrichtung (1), die so konfiguriert ist, dass sie Licht auf ein Messobjekt (100) emittiert und ein Lichtintensitätsverteilungsmuster auf dem Messobjekt (100) bereitstellt;
ein zweidimensionales fotoelektrisches Umwandlungselement (3), das eine zweidimensionale Anordnung von Pixeln umfasst, wobei das zweidimensionale fotoelektrische Umwandlungselement (3) so angeordnet ist, dass es eine spiegelnde und nahezu spiegelnde Reflexion empfängt und die Reflexionen in Bilddaten umwandelt, wenn es in Gebrauch ist, wobei die einzelne Beleuchtungsvorrichtung (1) das Licht zu dem Messobjekt (100) emittiert, das eine Glitzereffektmaterial enthaltende Schicht in einem äußersten Bereich des Messobjekts (100) aufweist, wobei die Glitzereffektmaterial enthaltende Schicht (101) ein Glitzereffektmaterial (110) enthält;
ein Berechnungsmittel, das so konfiguriert ist, dass es eine erste Komponente, die eine Komponente einer spiegelnden Reflexion von einer Oberfläche des Messobjekts (100) ist, unter Bezugnahme auf die Bilddaten berechnet; und
ein Extraktionsmittel, das so konfiguriert ist, dass es eine zweite Komponente extrahiert, die eine Komponente einer Reflexion von dem Material (110) mit Glitzereffekt ist, indem es die erste Komponente von den Bilddaten subtrahiert, wobei die erste Komponente durch das Berechnungsmittel berechnet wird;
**dadurch gekennzeichnet, dass** das Berechnungsmittel so konfiguriert ist, dass es die erste Komponente berechnet, indem es die Bilddaten an Positionen analysiert, von denen angenommen wird, dass sie eine äquivalente Beleuchtungsstärke gemäß dem Lichtintensitätsverteilungsmuster auf dem Messobjekt (100) durch die Beleuchtungsvorrichtung (1) aufweisen, und dass es die gemeinsame Spiegelreflexionskomponente an den Positionen erhält.

2. Vorrichtung zur Analyse optischer Eigenschaften nach Anspruch 1, wobei die Beleuchtungseinrichtung (1) in der Lage ist, ein bestimmtes Lichtmuster anzuzeigen.

3. Vorrichtung zur Analyse optischer Eigenschaften nach Anspruch 1 oder 2, wobei das Berechnungsmittel die erste Komponente durch Ausführen einer Kurvenanpassung der Bilddaten mit einer vorbestimmten Modellierungsfunktion berechnet, wobei die vorbestimmte Modellierungsfunktion ein Lichtintensitätsverteilungsmuster auf dem Messobjekt durch die Beleuchtungsvorrichtung (1) darstellt.

4. Vorrichtung zur Analyse optischer Eigenschaften nach Anspruch 1 oder 2, wobei das Berechnungsmittel die erste Komponente berechnet durch Wiederholen:
einen ersten Prozess der Durchführung einer Kurvenanpassung mit einer vorbestimmten Modellierungsfunktion, wobei die vorbestimmte Modellierungsfunktion ein Lichtstärkeverteilungsmuster auf dem Messobjekt (100) durch die Beleuchtungsvorrichtung (1) darstellt; und
einen zweiten Prozess des Analysierens der Bilddaten an Positionen, von denen angenommen wird, dass sie eine äquivalente Beleuchtungsstärke gemäß dem Lichtstärkeverteilungsmuster auf dem Messobjekt (100) durch die Beleuchtungsvorrichtung (1) haben, und des Erhaltens einer gemeinsamen Spiegelreflexionskomponente an den Positionen.

5. Vorrichtung zur Analyse optischer Eigenschaften nach Anspruch 1 oder 4, wobei das Berechnungsmittel die erste Komponente berechnet, indem es die Helligkeit in den Bilddaten an den Positionen misst, von denen angenommen wird, dass sie eine äquivalente Beleuchtungsstärke aufweisen, und den niedrigsten Helligkeitswert als eine gemeinsame Spiegelreflexionskomponente an den Positionen erhält.

6. Vorrichtung zur Analyse optischer Eigenschaften nach Anspruch 1 oder 4, wobei das Berechnungsmittel die erste Komponente berechnet, indem es eine Fourier-Transformation der Helligkeitsinformationen in den Bilddaten an den Positionen berechnet, von denen angenommen wird, dass sie eine äquivalente Beleuchtungsstärke aufweisen, Frequenzen der Fourier-Transformation extrahiert, die niedriger als ein vorbestimmter Schwellenwert sind, und eine inverse Fourier-Transformation der extrahierten Frequenzen als eine gemeinsame Spiegelreflexionskomponente an den Positionen berechnet.

7. Vorrichtung zur Analyse optischer Eigenschaften nach irgendeinem der Ansprüche 1 bis 6, wobei, wenn ein zur Berechnung der ersten Komponente zu verwendender Bilddatenwert ein Wert ist, der nicht in einen vorbestimmten Bereich der Standardabweichung oder der Werte, die niedriger als ein vorbestimmter Schwellenwert sind, fällt, das Berechnungsmittel den Bilddatenwert nicht zur Berechnung der ersten Komponente verwendet.

8. Vorrichtung zur Analyse optischer Eigenschaften nach irgendeinem der Ansprüche 1 bis 6, wobei, wenn ein zur Berechnung der ersten Komponente zu verwendender Bilddatenwert kleiner als ein vorbestimmter Schwellenwert ist, das Berechnungsmittel den Bilddatenwert nicht zur Berechnung der ersten Komponente verwendet.

9. Vorrichtung zur Analyse optischer Eigenschaften nach irgendeinem der Ansprüche 1 bis 8, wobei, wenn ein zur Berechnung der ersten Komponente zu verwendender Bilddatenwert ein Wert ist, der nicht in einen vorbestimmten Bereich der Standardabweichung oder der Werte, die höher als ein vorbestimmter Schwellenwert sind, fällt, das Berechnungsmittel den Bilddatenwert nicht zur Berechnung der ersten Komponente verwendet.

10. Vorrichtung zur Analyse optischer Eigenschaften nach irgendeinem der Ansprüche 1 bis 8, wobei, wenn ein zur Berechnung der ersten Komponente zu verwendender Bilddatenwert größer als ein vorbestimmter Schwellenwert ist, das Berechnungsmittel den Bilddatenwert nicht zur Berechnung der ersten Komponente verwendet.

11. Vorrichtung zur Analyse optischer Eigenschaften nach Anspruch 3 oder 4, wobei die vorbestimmte Modellierungsfunktion, die das Lichtintensitätsverteilungsmuster durch die Beleuchtungsvorrichtung (1) darstellt, eine Polynomfunktion vom Grad Null oder größer ist.

12. Vorrichtung zur Analyse optischer Eigenschaften nach Anspruch 3 oder 4, wobei die vorbestimmte Modellierungsfunktion, die das Lichtintensitätsverteilungsmuster durch die Beleuchtungsvorrichtung (1) darstellt, eine periodische Funktion ist.

13. Vorrichtung zur Analyse optischer Eigenschaften nach Anspruch 3 oder 4, wobei die vorbestimmte Modellierungsfunktion, die das Lichtintensitätsverteilungsmuster durch die Beleuchtungsvorrichtung (1) darstellt, eine Exponentialfunktion ist.

14. Vorrichtung zur Analyse optischer Eigenschaften nach Anspruch 3 oder 4, wobei die vorbestimmte Modellierungsfunktion, die das Lichtintensitätsverteilungsmuster durch die Beleuchtungsvorrichtung (1) darstellt, eine Gaußfunktion ist.

15. Programm für einen Computer, das Anweisungen umfasst, die, wenn sie auf einem Rechenteil (4) ausgeführt werden, der in der Vorrichtung nach Anspruch 1 enthalten ist, die Vorrichtung nach Anspruch 1 veranlassen, die folgenden Schritte auszuführen:
wenn eine einzelne Beleuchtungsvorrichtung (1) Licht zu einem Messobjekt (100) mit einer Glitzereffektmaterial enthaltenden Schicht (101) in einem äußersten Bereich des Messobjekts (100) aussendet und ein photoelektrisches Umwandlungselement eine Reflexion empfängt, um Bilddaten zu erhalten, wobei die Glitzereffektmaterial enthaltende Schicht (101) ein Glitzereffektmaterial (110) enthält, Berechnen einer ersten Komponente, die eine Komponente einer spiegelnden Reflexion von einer Oberfläche des Messobjekts (100) ist, unter Bezugnahme auf die Bilddaten; und
Extrahieren einer zweiten Komponente, die eine Komponente einer Reflexion von dem Glitzereffektmaterial (110) ist, durch Subtrahieren der ersten Komponente von den Bilddaten, wobei die erste Komponente durch die Berechnung erhalten wird;
wobei die erste Komponente durch Analysieren der Bilddaten an Positionen, von denen angenommen wird, dass sie eine äquivalente Beleuchtungsstärke gemäß einem Lichtintensitätsverteilungsmuster auf dem Messobjekt (100) durch die Beleuchtungsvorrichtung (1) haben, und durch Erhalten einer gemeinsamen Spiegelreflexionskomponente an den Positionen berechnet wird.

16. Programm nach Anspruch 15 für den Computer zur Durchführung der Verarbeitung, wobei die erste Komponente durch Ausführen einer Kurvenanpassung der Bilddaten mit einer vorbestimmten Modellierungsfunktion berechnet wird, wobei die vorbestimmte Modellierungsfunktion ein Lichtintensitätsverteilungsmuster auf dem Messobjekt (100) durch die Beleuchtungsvorrichtung (1) darstellt.

17. Programm nach Anspruch 15 für den Computer zur Durchführung der Verarbeitung, wobei die erste Komponente durch Wiederholen über die gesamten Bilddaten berechnet wird:
einen ersten Prozess der Durchführung einer Kurvenanpassung mit einer vorbestimmten Modellierungsfunktion, wobei die vorbestimmte Modellierungsfunktion ein Lichtintensitätsverteilungsmuster auf dem Messobjekt (100) durch die Beleuchtungsvorrichtung (1) darstellt; und
einen zweiten Prozess des Analysierens der Bilddaten an Positionen, von denen angenommen wird, dass sie eine äquivalente Beleuchtungsstärke gemäß dem Lichtintensitätsverteilungsmuster auf dem Messobjekt (100) durch die Beleuchtungsvorrichtung (1) haben, und des Erhaltens einer eindeutigen Spiegelreflexionskomponente an den Positionen.

## Revendications

1. Appareil d'analyse de propriété optique comprenant :
un dispositif d'éclairage unique (1) configuré pour émettre de la lumière vers un objet de mesure (100) et pour fournir un modèle de distribution d'intensité lumineuse sur l'objet de mesure (100) ;
un élément de conversion photoélectrique bidimensionnel (3) comprenant un tableau bidimensionnel de pixels, l'élément de conversion photoélectrique bidimensionnel (3) conçu pour recevoir une réflexion spéculaire et presque spéculaire et pour convertir les réflexions en données d'image lorsque, en usage, le dispositif d'éclairage unique (1) émet la lumière vers l'objet de mesure (100) ayant une couche contenant un matériau à effet d'étincelle dans une région ultrapériphérique de l'objet de mesure (100), la couche contenant un matériau à effet d'étincelle (101) contenant un matériau à effet d'étincelle (110) ;
un moyen de calcul configuré pour calculer une première composante qui est une composante d'une réflexion spéculaire à partir d'une surface de l'objet de mesure (100), en référence aux données d'image ; et
un moyen d'extraction configuré pour extraire une deuxième composante qui est une composante d'une réflexion à partir du matériau à effet d'étincelle (110), en soustrayant la première composante des données d'image, la première composante étant calculée par le moyen de calcul ;
**caractérisé en ce que** le moyen de calcul est configuré pour calculer la première composante en analysant les données d'image à des positions supposées avoir un éclairement équivalent selon le modèle de distribution d'intensité lumineuse sur l'objet de mesure (100) par le dispositif d'éclairage (1) et pour obtenir la composante commune de réflexion spéculaire aux positions.

2. Appareil d'analyse de propriété optique selon la Revendication 1, dans lequel le dispositif d'éclairage (1) est capable d'afficher un modèle lumineux spécifique.

3. Appareil d'analyse de propriété optique selon la Revendication 1 ou 2, dans lequel le moyen de calcul calcule la première composante en effectuant un ajustement de courbe des données d'image avec une fonction de modélisation prédéterminée, la fonction de modélisation prédéterminée représentant un modèle de distribution d'intensité lumineuse sur l'objet de mesure par le dispositif d'éclairage (1).

4. Appareil d'analyse de propriété optique selon la Revendication 1 ou 2, dans lequel le moyen de calcul calcule la première composante en répétant :
un premier processus d'ajustement de courbe avec une fonction de modélisation prédéterminée, la fonction de modélisation prédéterminée représentant un modèle de distribution d'intensité lumineuse sur l'objet de mesure (100) par le dispositif d'éclairage (1) ; et
un deuxième processus d'analyse des données d'image à des positions supposées avoir un éclairement équivalent selon le modèle de distribution d'intensité lumineuse sur l'objet de mesure (100) par le dispositif d'éclairage (1) et l'obtention d'une composante commune de réflexion spéculaire aux positions.

5. Appareil d'analyse de propriété optique selon la Revendication 1 ou 4, dans lequel le moyen de calcul calcule la première composante en mesurant la luminosité dans les données d'image aux positions supposées avoir un éclairement équivalent et en obtenant la valeur de luminosité la plus faible comme une composante commune de réflexion spéculaire aux positions.

6. Appareil d'analyse de propriété optique selon la Revendication 1 ou 4, dans lequel le moyen de calcul calcule la première composante en calculant une transformée de Fourier des informations de luminosité dans les données d'image aux positions supposées avoir un éclairement équivalent, en extrayant des fréquences de transformée de Fourier inférieures à un seuil prédéterminé, et en calculant une transformée de Fourier inverse des fréquences extraites comme une composante commune de réflexion spéculaire aux positions.

7. Appareil d'analyse de propriété optique selon l'une quelconque des Revendications 1 à 6, dans lequel, lorsqu'une valeur de données d'image à utiliser pour calculer la première composante est une valeur qui ne se situe pas dans une plage prédéterminée de l'écart type ou les valeurs qui sont inférieures à un seuil prédéterminé, le moyen de calcul n'utilise pas la valeur de données d'image pour calculer la première composante.

8. Appareil d'analyse de propriété optique selon l'une quelconque des Revendications 1 à 6, dans lequel, lorsqu'une valeur de données d'image à utiliser pour calculer la première composante est moins qu'un seuil prédéterminé, le moyen de calcul n'utilise pas la valeur de données d'image pour calculer la première composante.

9. Appareil d'analyse de propriété optique selon l'une quelconque des Revendications 1 à 8, dans lequel, lorsqu'une valeur de données d'image à utiliser pour calculer la première composante est une valeur qui ne se situe pas dans une plage prédéterminée de l'écart type ou des valeurs qui sont supérieures à un seuil prédéterminé, le moyen de calcul n'utilise pas la valeur de données d'image pour calculer la première composante.

10. Appareil d'analyse de propriété optique selon l'une quelconque des Revendications 1 à 8, dans lequel, lorsqu'une valeur de données d'image à utiliser pour calculer la première composante est plus qu'un seuil prédéterminé, le moyen de calcul n'utilise pas la valeur de données d'image pour calculer la première composante.

11. Appareil d'analyse de propriété optique selon la Revendication 3 ou 4, dans lequel la fonction de modélisation prédéterminée représentant le modèle de distribution d'intensité lumineuse par le dispositif d'éclairage (1) est une fonction polynomiale de degré zéro ou plus.

12. Appareil d'analyse de propriété optique selon la Revendication 3 ou 4, dans lequel la fonction de modélisation prédéterminée représentant le modèle de distribution d'intensité lumineuse par le dispositif d'éclairage (1) est une fonction périodique.

13. Appareil d'analyse de propriété optique selon la Revendication 3 ou 4, dans lequel la fonction de modélisation prédéterminée représentant le modèle de distribution d'intensité lumineuse par le dispositif d'éclairage (1) est une fonction exponentielle.

14. Appareil d'analyse des propriétés optiques selon la Revendication 3 ou 4, dans lequel la fonction de modélisation prédéterminée représentant le modèle de distribution d'intensité lumineuse par le dispositif d'éclairage (1) est une fonction gaussienne.

15. Programme pour un ordinateur comprenant des instructions qui, lorsqu'elles sont exécutées sur une partie calculant (4) comprise dans l'appareil de la revendication 1, cause l'appareil de la revendication 1 à exécuter les étapes suivantes :
lorsqu'un dispositif d'éclairage unique (1) émet de la lumière vers un objet de mesure (100) ayant une couche contenant un matériau à effet d'étincelle (101) dans une région ultrapériphérique de l'objet de mesure (100) et qu'un élément de conversion photoélectrique reçoit une réflexion pour obtenir des données d'image, la couche contenant un matériau à effet d'étincelle (101) contenant un matériau à effet d'étincelle (110), calculer une première composante qui est une composante d'une réflexion spéculaire à partir d'une surface de l'objet de mesure (100), en référence aux données d'image ; et
extraire une deuxième composante qui est une composante d'une réflexion du matériau à effet d'étincelle (110), en soustrayant la première composante des données d'image, la première composante étant obtenue par le calcul ;
la première composante étant calculée en analysant les données d'image à des positions supposées avoir un éclairement équivalent selon un modèle de distribution d'intensité lumineuse sur l'objet de mesure (100) par le dispositif d'éclairage (1) et en obtenant une composante commune de réflexion spéculaire aux positions.

16. Programme selon la Revendication 15 pour l'ordinateur pour exécuter du traitement, dans lequel la première composante est calculée en effectuant de l'ajustement de courbe des données d'image avec une fonction de modélisation prédéterminée, la fonction de modélisation prédéterminée représentant un modèle de distribution d'intensité lumineuse sur l'objet de mesure (100) par le dispositif d'éclairage (1).

17. Programme selon la Revendication 15 pour l'ordinateur pour exécuter du traitement, dans lequel la première composante est calculée en répétant sur les données d'image entières:
un premier processus d'effectuant de l'ajustement de courbe avec une fonction de modélisation prédéterminée, la fonction de modélisation prédéterminée représentant un modèle de distribution d'intensité lumineuse sur l'objet de mesure (100) par le dispositif d'éclairage (1) ; et
un deuxième processus d'analysant des données d'image aux positions supposées avoir un éclairement équivalent selon le modèle de distribution d'intensité lumineuse sur l'objet de mesure (100) par le dispositif d'éclairage (1) et obtenant une composante unique de réflexion spéculaire aux positions.
